(19) Europäisches Patentamt

European Patent Office

Office européen des brevets

(11) **EP 2 385 100 A1**

(12) **EUROPEAN PATENT APPLICATION**

(43) Date of publication:
**09.11.2011 Bulletin 2011/45**

(51) Int Cl.:
**C12C 12/04** (2006.01)   **C12C 7/04** (2006.01)
**C12C 7/047** (2006.01)   **C12C 11/00** (2006.01)

(21) Application number: **10162315.5**

(22) Date of filing: **07.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Anheuser-Busch InBev S.A.**
**1000 Brussels (BE)**

(72) Inventor: **Vanderhaegen, Bart**
**3010 Kessel-LO (BE)**

(74) Representative: **Luys, Marie-José A.H. et al**
**Gevers**
**Intellectual Property House**
**Holidaystraat 5**
**1831 Diegem (BE)**

(54) **Low alcohol or alcohol free beer and method for producing it**

(57)     The present invention concerns an acohol free or low alcohol beer having an alcohol content of not more than 0.7 vol.%, characterized by a relationship

$$y \geq A \, x^b$$

wherein A = 0.25 and b = 1.5, and wherein
• x is the ratio between unfermentable over real extracts, wherein the unfermentable extract is the value of the real extract less the total content of real sugars, which consist of fructose, maltose, glucose, maltotriose, and saccharose, and
• y is the ratio between the combined content of maltopentaose, maltohexaose, and maltoheptaose over the total amount of main sugars, wherein the main sugars consist of fructose, maltose, glucose, saccharose, maltotriose, maltotetraose, maltopentaose, maltohexaose, and maltoheptaose.

It also concerns a method for producing an acohol free or low alcohol beer comprising
• Preparing a wort (23) of fermentability not higher than 29%, preferably, not higher than 25%, more preferably at most 20%; and
• Fermenting the thus prepared wort in a fermentation tank (4) by a cold contact process.

FIGURE 3

EP 2 385 100 A1

**Description**

**Technical Field**

The present invention relates to a low alcohol or alcohol free beer having a flavour profile very close to regular lager beer. The present invention also concerns a method for producing such beer.

**Background for the invention**

Low alcohol or alcohol free beers have different definitions depending on the national legislation of the different States. In the context of the present invention, a "low alcohol beer" is defined as a beer having an alcohol content of not more than 0.7 vol.%, and an "alcohol free beer" as a beer having an alcohol content of not more than 0.1 vol.%. The present invention concerns both types of beers, jointly referred to in the following as "NA beers", and including beers with even lower alcohol contents of not more than 0.05 vol.%. Attempts to produce NA beers having a flavour profile close to regular lager beers have had limited success in the past.

One way of producing NA beer is to carry out normal fermentation of the wort and to remove the alcohol by distillation, evaporation, dialysis, or reverse osmosis techniques. These techniques involve high capital or energy costs, and have limited production rates.

Alternatively, so called cold contact fermentation, as described e.g., in US6689401 and US5346706, allows to reduce the fermentation rate of sugars in contact with yeast, whilst by-products provided by the yeast are still present as in alcoholic lager beers, giving a distinct aroma thereto. NA beers produced by cold contact brewing, however, generally show an excess sweetness due to the presence of considerable amounts of unfermented sweet sugars.

In some cases, the alcohol content of a beer needs be reduced by diluting it with water, with the obvious detrimental consequences on taste if too much water is needed to attain the target alcohol content (cf. e.g., US4970082).

It is well known that a number of enzymes, in particular α-amylase and β-amylase, formed during germination of malt are responsible for the production of fermentable and non-fermentable sugars from starch in a mash. Starch is a large and complex carbohydrate molecule consisting of a large number of glucose units joined together by glycosidic bonds (= polysaccharide). β-amylase breaks down these units from the end molecules producing more low-order sugars like maltose, which are easily fermentable by yeast, and thus yielding more alcohol.

α-amylase, on the other hand, breaks down starch from the inside, and starts cutting off links of glucose creating more higher-order sugars and dextrins, such as maltotetraose, maltopentaose, maltohexaose, and maltoheptaose, which are less fermentable by the yeast, and thus yielding less alcohol.

GB2181450 proposes a method for producing a wort of low fermentatbility, by inactivating β-amylase in a malt and reacting α-amylase with starch within the malt to produce a wort rich in unfermentable sugars. β-amylase is inactivated thermally at temperatures of up to 85°C, and thermostable α-amylase is added to the mash to yield a wort of fermentability of 30 to 50% instead of 70% as would be typical in a normal mash. The "fermentability" expressed in percent is the weight proportion of the wort which will react with yeast to produce alcohol. A beer with low residual sweetness having an alcohol content of 1.55 vol.% compared with 3.3 vol.% for the control batch was produced from such low fermentability wort. By addition of lactose in the copper, the alcohol content was further reduced to 1.2 vol.%.

It can be seen from the above review that it still remains a need in the art for a NA beer having a flavour profile close to normal lager beer, and which production is cost effective.

**Summary of the invention**

The present invention is defined in the appended independent claims. Preferred embodiments are defined in the dependent claims.

In particular, the present invention concerns an alcohol free or low alcohol beer having an alcohol content of not more than 0.7 vol.%, characterized by a relationship

$$y \geq A\,x^b$$

Wherein A = 0.25, preferably 0.3, more preferably 0.35, most preferably 0.45, and b = 1.5, preferably 1.0, and wherein,

- x is the ratio between unfermentable over real extracts, wherein the unfermentable extract is the value of the real extract less the total content of sweet sugars, which consist of fructose, maltose, glucose, maltotriose, and saccharose, and

- y is the ratio between the combined content of maltopentaose, maltohexaose, and maltoheptaose over the total amount of main sugars, wherein the main sugars consist of fructose, maltose, glucose, saccharose, maltotriose, maltotetraose, maltopentaose, maltohexaose, and maltoheptaose.

In a preferred embodiment the alcohol content of the beer according to the present invention is not more than 0.5 vol.%, preferably not more than 0.3 vol.%, more preferably not more than 0.1 vol.%, most preferably, not more than 0.05 vol.%.

In terms of absolute values, it is preferred that the unfermentable extract is at least 4.0 g / 100 ml, preferably at least 5.5 g / 100 ml, more preferably 6.0 g / 100 ml, most preferably at least 6.5 g / 100 ml, and the real extract is at least 5.0 g / 100 ml, preferably at least 6.0 g/ 100 ml, more preferably at least 7 g/ 100 ml. A NA beer according to the present invention should preferably not have a total content of sweet sugars higher than 3 g / 100 ml, preferably not higher than 2 g / 100 ml, more preferably not higher than 1.5 g / 100 ml.

The present invention also concerns a method for producing a NA beer comprising the following steps:

(a) Mashing grain grits by inactivating β-amylase and reacting α-amylase with starch within the grits to produce a wort of fermentability of not more than 29%, preferably not more than 25%, more preferably nor more than 20%; and
(b) Fermenting the thus produced wort by a cold contact process to produce a beer having an alcohol content of not more than 0.7 vol.%, preferably not more than 0.5 vol.%, more preferably not more than 0.3 vol.%, most preferably not more than 0.03 vol.%.

The grain grits should comprises malt, preferably admixed with corn grits and/or rice grits. In particular, the grits may be composed of 30 to 100 wt% malt and 70 to 0 wt% corn grits. The β-amylase is preferably inactivated by bringing the temperature of the grits mash over 75°C, preferably over 85°C and wherein thermostable α-amylase is added. For example, the mashing may comprise the following steps:

(a) If any, adding to a corn grits mash an appropriate amount of thermostable α-amylase and heating the corn mash to a temperature of 85 to 100°C;
(b) Mashing in malt at a temperature of 70 to 100³C, preferably 78 to 85°C, and combining it with the corn mash, if any, and bringing the temperature of the thus obtained mash to higher than 75°C, preferably higher than 85°C and adding thereto thermostable α-amylase;
(c) Raising the temperature to a value of 90 to 98°C and transferring the mash to lautering.

The wort is then boiled and has then a gravity comprised between 6 and 20°P, preferably between 8 and 12°P, more preferably between 9 and 11°P. The wort is thereafter cooled to a preferred temperature of 2 to 8°C, preferably of 2 to 5°C, and then cooled to 2 to 0°C for the cold contact fermentation stage. The method of the present invention is suitable for producing a NA beer as discussed above.

**Brief description of the Figures**

For a fuller understanding of the nature of the present invention, reference is made to the following detailed description taken in conjunction with the accompanying drawings in which:

Figure 1:   shows a schematic representation of the main steps for the production of beer.
Figure 2:   shows an embodiment of temperature-time profile in the cereal cooker and the mash tun, according to the present invention.
Figure 3:   shows a plot of the ratio of x vs y for a number of beers according to the present invention compared with prior art commercial NA beers and showing the function, $y = A x^b$, defining the subject matter of the present invention.

**Detailed description of the invention**

The NA beer of the present invention has an alcohol content of not more than 0.7 vol.%, and may even have alcohol contents of not more than 0.1 vol.% or even 0.05 vol.% with a flavour profile which remains very close to normal lager beer. The flavour profile of a beer is a very complex issue and is usually assessed by a panel of experts marking several dozens of parameters such as sweetness, fruitiness, bitterness, after-bitterness, caramel note, worty note, and the like. Although some flavour characteristics may be asoociated with a specific component, such as bitterness being associated with the presence of hops, the overall flavour profile is beyond a full understanding, as there are a myriad of parameters controlling it: types and contents of the components used, time-temperature profiles, pH, etc. Any change in one of said parameters, affects the flavour profile of a beer.

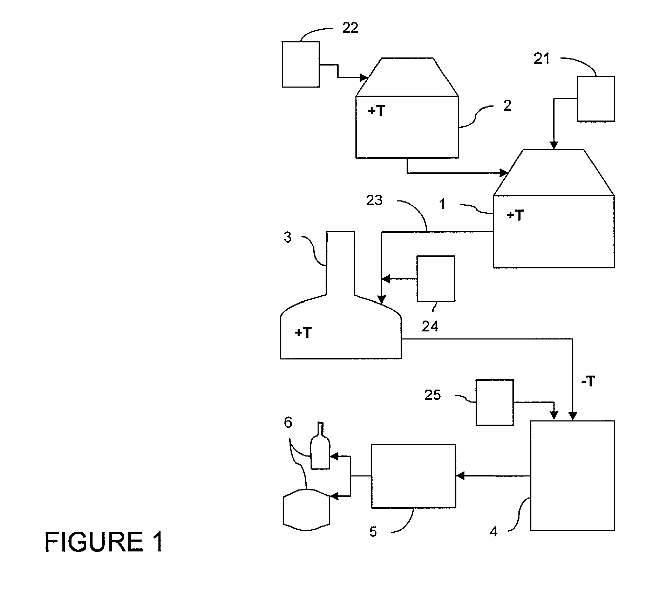

A typical brewing process involves the main steps schematically depicted in Figure 1. Malt (21) is mashed in a mash tun (1) to transform starch into sugars. It is possible to add thereto grain grits (22) previously cooked in a cereal cooker (2). When mashing is over, mixture is transferred to lautering where the solid phase is separated from the liquid wort (23), the latter being loaded in a copper (3), sometimes also called kettle. The wort is boiled and hops is added, giving to beer its distinct bitter taste. During this stage, many reactions, such as Maillard reactions, occur, developing various flavours and aroma characteristic of each beer. At the end of the boil, the hopped wort is clarified and cooled down prior to transferring it into a fermentation tank (4) where the fermentable sugars, in presence of yeast (25), will be transformed into alcohol and $CO_2$. After fermentation is completed, the liquid is conditioned for several days or even weeks in conditioning tanks (5) until the beer has matured and is ready to be bottled or transferred into kegs (6).

The NA beer of the present invention can be produced by a method as disclosed supra, further characterized in that it comprises:

(a) Preparing a wort (23) of fermentability not higher than 29%, preferably not higher than 25%, more preferably at most 20%; and
(b) Fermenting the thus prepared wort in a fermentation tank (4) by a cold contact process.

Such low fermentability wort (23) is prepared in a mash tun (1) by inactivating β-amylase in a grain grits mash and reacting α-amylase with starch within the grits. β-amylase is best inactivated by heating the mash at a temperature higher than 75°C, preferably higher than 85°C. Because a substantial fraction of α-amylase formed by malt may be inactivated too at a temperature higher than 75°C, it may be necessary to add thermostable α-amylase to the mash, for instance Thermamyl of Novo Enzyme. The mash is maintained at such thermal conditions until a wort (23) of fermentability of at most 29%, preferably at most 25%, more preferably not higher than 20% is obtained, resulting in a wort which is rich in poorly fermentable dextrins, typically maltopentaose, maltohexaose, and maltoheptaose, and concomitantly which is poor in highly fermentable sweet sugars (i.e., glucose, fructose, maltose, saccharose, and maltotriose). These worts are richer in dextrins and poorer in sweet sugars than a wort of say 30% fermentability as disclosed in GB2181450. Beyond yielding a beer with less alcohol after the fermentation process, it is believed that the higher content in dextrins is responsible for less Maillard reactions during the boiling step in the copper (3). The Maillard reaction is "a chemical reaction between an amino acid and a reducing sugar, usually requiring heat, [wherein] the reactive carbonyl group of the sugar reacts with the nucleophilic amino group of the amino acid, and forms a complex mixture of poorly characterized molecules responsible for a range of odors and flavor[u]rs [...].In the process, hundreds of different flavor [u]r compounds are created. These compounds in turn break down to form yet more new flavor[u]r compounds, and so on. Each type of food has a very distinctive set of flavor[u]r compounds that are formed during the Maillard reaction" (cf. http://en.wikipedia.org/wiki/Maillard_reaction).

Reducing Maillard reactions in the beer brewing process is not an objective per se, but it was observed that in the case of NA beers, it yields a flavour profile which is closer to normal lager beer. Without being bound by any theory, it is believed that a higher fraction of dextrin with respect to sweet sugars in the mash reduces the number of reactive carbonyl groups available for Maillard reactions during the boiling of the wort in the copper (3).

Preferably the grain grits comprises malt (21), such as malted barley, which is preferably admixed with corn grits and/or rice grits (22). For example, the grits may comprise 30 to 100 wt% malt and 70 to 0 wt% corn grits and/or rice grits. The water to grist ratio in the mash is preferably comprised between 3 and 6, ptreferably between 4 and 5, mote preferably between 4 and 4.5, and the pH is mainatinaed between 5 and 7, preferably between 5.2 and 6, more preferably between 5.4 and 5.6.

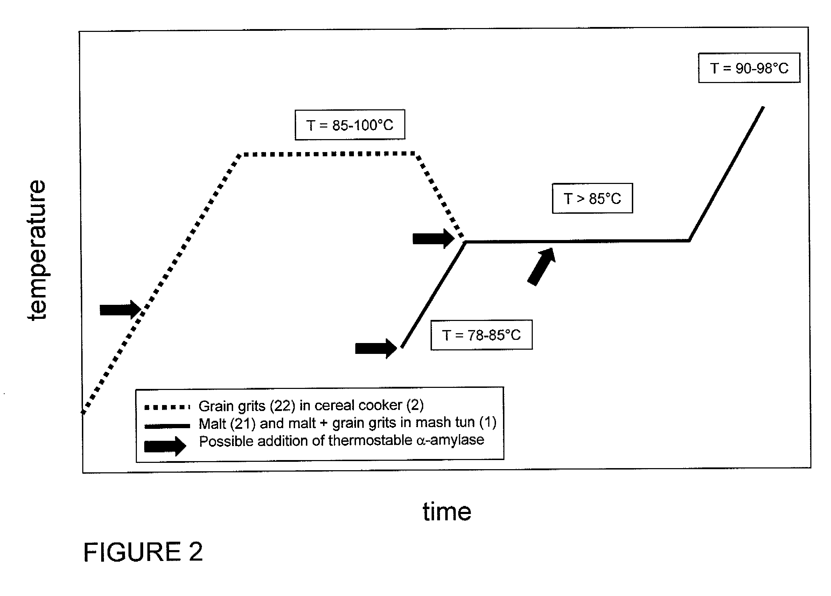

Figure 2 shows an example of temperature-time profile during mashing. In the embodiment illustrated therein, malt (21) is admixed with grain grits (22), for example corn grits, which is first cooked in a cereal cooker (2) at a temperature between 85 and 100°C. Thermostable α-amylase can be added to the cooking corn grits. Malt (21), e.g., barley malt, is mashed in a mash tun (1) at a temperature of 78 to 85°C with additional thermostable α-amylase. The corn grits is added into the mash tun containing the malt and the temperature is raised to above 85°C. The necessary amount of thermostable α-amylase may be added at any time during mashing. When mashing is completed, the temperature is raised again to 90-98°C for the transfer to lautering to recover a wort of fermentability of at most 25%, preferably, at most 20%.

After boiling of the wort in the copper in presence of hops, the boiled wort preferably has a gravity comprised between 6 and 20°P, preferably between 8 and 12°P, more preferably between 9 and 11°P. The wort is then cooled to a temperature of 2 to 8°C, preferably of 2 to 5°C, before transferring it into a fermentation tank (4), wherein the wort is fermented by a cold contact process at a temperature of 0 to 2°C for 12 to 72. It is possible to flush beer shortly with $CO_2$ before transferring it to conditioning tanks to yield a NA beer of alcohol content of not more than 0.7 vol.%, down to even not more than 0.05 vol.%. Some dilution is not excluded but only to fine tune the final alcohol content of the beer, and not as the main mean to reach a low alcohol content.

Different batches of beer obtained by such process, all having an alcohol content of less than 0.45 vol.%, were tested by a panel of experts, and their conclusion was that their flavour profiles were particularly close to the ones of STELLA ARTOIS and JUPILER BLUE, two popular lager beers in Belgium. Table 1 lists the alcohol contents, extracts and sugars contents of a number of commercial NA beers (CEX1 to CEX16) compared with the ones of NA beers according to the present invention (EX1 to EX1 3). As many of the NA beers of the comparative examples belong to the competition, it is not always known how they were processed. It is known, however, that the NA beer of CEX3 was obtained by arresting fermentation by a cold contact process, whilst the NA beers of CEX14-16 were obtained by evaporation.

It can be seen from Table 1, that the sweet sugars contents (= fructose, glucose, maltose, saccharose, and maltotriose) of the NA beers according to the present invention are quite low when compared with CEX3 obtained by a cold contact fermentation process. This is to be expected, since in these beers, the wort contains a high proportion of fermentable, sweet sugars, which are not allowed to ferment by the cold contact process, and thus remain in the beers, giving a strongly sweet taste. Based on their high contents of sweet sugars, it can be assumed -with no guarantee- that the NA beers of CEX4 and 9 were also fermented by cold contact. On the other hand, as could be expected, the content in sweet sugars of NA beers of CEX14-16 is very low, since the sweet sugars present in the wort were allowed to ferment, but the alcohol thus produced was withdrawn by evaporation. Based on their low amounts of sweet sugars, it can be assumed that the NA beers of CEX10&11 were obtained by retrieving the alcohol after fermentation, by any process such as evaporation, distillation, etc.

Table 1: alcohol content, extracts, and sugars content of a number of prior art and inventive NA Beers

| Beer | Alcohol | Real extract | Real extract | Unfermentable extract | Sweet sugars | | | | | Maltotetraose | malto-5-6-7-ose | | | Sweet sugars total | Figure 3 | |
|---|---|---|---|---|---|---|---|---|---|---|---|---|---|---|---|---|
| | | | | | Fructose | Glucose | Maltose | Saccharose | Maltotriose | | Maltopentaose | Maltohexaose | Maltoheptaose | | Unfermentable extract | malto 5,6,7-ose % |
| | vol.% | g/100 g | g/100 ml | g/100 ml | g/100 ml | g/100 ml | g/100 ml | g/100 ml | g/100 ml | g/100 ml | g/100 ml | g/100 ml | g/100 ml | g/100 ml | % | |
| CEX1 | 0,46 | 3,71 | 3,76 | 2,57 | 0,55 | 0,60 | 0,02 | 0,00 | 0,02 | 0,27 | 0,06 | 0,04 | 0,02 | 1,19 | 68% | 8% |
| CEX2 | 0,42 | 4,28 | 4,34 | 2,44 | 0,83 | 1,01 | 0,02 | 0,00 | 0,04 | 0,18 | 0,05 | 0,03 | 0,01 | 1,90 | 56% | 4% |
| CEX3 | 0,43 | 6,65 | 6,81 | 2,17 | 0,18 | 0,45 | 3,13 | 0,00 | 0,88 | 0,15 | 0,02 | 0,03 | 0,01 | 4,64 | 32% | 1% |
| CEX4 | 0,04 | 6,61 | 6,77 | 2,42 | 0,49 | 0,67 | 2,09 | 0,64 | 0,46 | 0,14 | 0,02 | 0,02 | 0,01 | 4,35 | 36% | 1% |
| CEX5 | 0,01 | 4,67 | 4,75 | 2,60 | 0,22 | 0,28 | 1,31 | 0,07 | 0,27 | 0,04 | 0,01 | 0,02 | 0,01 | 2,15 | 55% | 2% |
| CEX6 | 0,57 | 5,28 | 5,38 | 2,81 | 0,11 | 0,18 | 1,62 | 0,00 | 0,66 | 0,09 | 0,13 | 0,04 | 0,04 | 2,57 | 52% | 7% |
| CEX7 | 0,00 | 5,87 | 6,00 | 2,28 | 0,22 | 0,17 | 2,57 | 0,01 | 0,75 | 0,16 | 0,02 | 0,02 | 0,01 | 3,72 | 38% | 1% |
| CEX8 | 0,48 | 7,12 | 7,31 | 3,73 | 0,06 | 0,77 | 2,41 | 0,00 | 0,34 | 0,34 | 0,08 | 0,07 | 0,04 | 3,58 | 51% | 5% |
| CEX9 | 0,04 | 6,18 | 6,32 | 2,00 | 0,13 | 0,34 | 2,91 | 0,03 | 0,91 | 0,09 | 0,02 | 0,03 | 0,02 | 4,32 | 32% | 2% |
| CEX10 | 0,33 | 4,47 | 4,54 | 4,09 | 0,00 | 0,00 | 0,07 | 0,00 | 0,38 | 0,29 | 0,03 | 0,05 | 0,03 | 0,45 | 90% | 13% |
| CEX11 | 0,04 | 4,38 | 4,45 | 4,07 | 0,00 | 0,00 | 0,04 | 0,00 | 0,34 | 0,27 | 0,03 | 0,05 | 0,02 | 0,38 | 91% | 14% |
| CEX12 | 0,22 | 3,64 | 3,69 | 1,29 | 0,14 | 0,29 | 1,58 | 0,00 | 0,39 | 0,04 | 0,01 | 0,01 | 0,01 | 2,40 | 35% | 1% |
| CEX13 | 0,06 | 6,34 | 6,49 | 2,72 | 0,00 | 0,00 | 2,91 | 0,06 | 0,80 | 0,23 | 0,03 | 0,03 | 0,02 | 3,77 | 42% | 2% |
| CEX14 | 0,40 | 3,66 | 3,71 | 3,10 | 0,39 | 0,22 | 0,00 | 0,00 | 0,00 | 0,37 | 0,05 | 0,04 | 0,01 | 0,61 | 84% | 9% |
| CEX15 | 0,44 | 4,10 | 4,16 | 3,47 | 0,40 | 0,24 | 0,00 | 0,00 | 0,05 | 0,27 | 0,05 | 0,10 | 0,03 | 0,69 | 83% | 16% |
| CEX16 | 0,45 | 5,34 | 5,44 | 4,99 | 0,29 | 0,14 | 0,00 | 0,00 | 0,02 | 0,46 | 0,08 | 0,11 | 0,03 | 0,45 | 92% | 20% |
| EX1 | 0,01 | 7,78 | 8,01 | 6,58 | 0,31 | 0,27 | 0,38 | 0,00 | 0,47 | 0,21 | 0,22 | 0,60 | 0,20 | 1,43 | 82% | 41% |
| EX2 | 0,31 | 7,47 | 7,68 | 6,55 | 0,16 | 0,12 | 0,38 | 0,00 | 0,47 | 0,21 | 0,22 | 0,60 | 0,20 | 1,13 | 85% | 47% |
| EX3 | 0,00 | 7,94 | 8,18 | 5,88 | 0,28 | 0,61 | 0,83 | 0,03 | 0,55 | 0,35 | 0,30 | 0,71 | 0,15 | 2,30 | 72% | 32% |
| EX4 | 0,00 | 8,02 | 8,26 | 6,47 | 0,35 | 0,45 | 0,48 | 0,00 | 0,51 | 0,22 | 0,23 | 0,62 | 0,20 | 1,79 | 78% | 37% |
| EX5 | 0,12 | 7,77 | 8,00 | 6,02 | 0,31 | 0,44 | 0,73 | 0,00 | 0,50 | 0,33 | 0,29 | 0,70 | 0,15 | 1,98 | 75% | 35% |
| EX6 | 0,14 | 7,71 | 7,93 | 6,50 | 0,31 | 0,27 | 0,38 | 0,00 | 0,47 | 0,21 | 0,22 | 0,60 | 0,20 | 1,43 | 82% | 41% |
| EX7 | 0,13 | 7,78 | 8,01 | 5,98 | 0,31 | 0,45 | 0,75 | 0,00 | 0,52 | 0,35 | 0,29 | 0,71 | 0,15 | 2,03 | 75% | 34% |
| EX8 | 0,13 | 7,80 | 8,03 | 6,01 | 0,31 | 0,46 | 0,74 | 0,00 | 0,51 | 0,34 | 0,30 | 0,72 | 0,15 | 2,02 | 75% | 35% |
| EX9 | 0,35 | 6,42 | 6,57 | 5,20 | 0,12 | 0,10 | 0,57 | 0,00 | 0,58 | 0,13 | 0,23 | 0,41 | 0,09 | 1,37 | 79% | 34% |
| EX10 | 0,45 | 7,21 | 7,40 | 5,83 | 0,12 | 0,08 | 0,70 | 0,00 | 0,67 | 0,33 | 0,44 | 0,73 | 0,00 | 1,57 | 79% | 38% |
| EX11 | 0,47 | 7,21 | 7,40 | 5,80 | 0,12 | 0,08 | 0,73 | 0,00 | 0,67 | 0,33 | 0,48 | 0,72 | 0,04 | 1,60 | 78% | 40% |
| EX12 | 0,36 | 7,42 | 7,62 | 6,19 | 0,13 | 0,10 | 0,58 | 0,00 | 0,62 | 0,30 | 0,27 | 0,65 | 0,14 | 1,43 | 81% | 40% |
| EX13 | 0,43 | 7,30 | 7,50 | 5,92 | 0,13 | 0,11 | 0,67 | 0,00 | 0,67 | 0,29 | 0,42 | 0,71 | 0,06 | 1,58 | 79% | 40% |

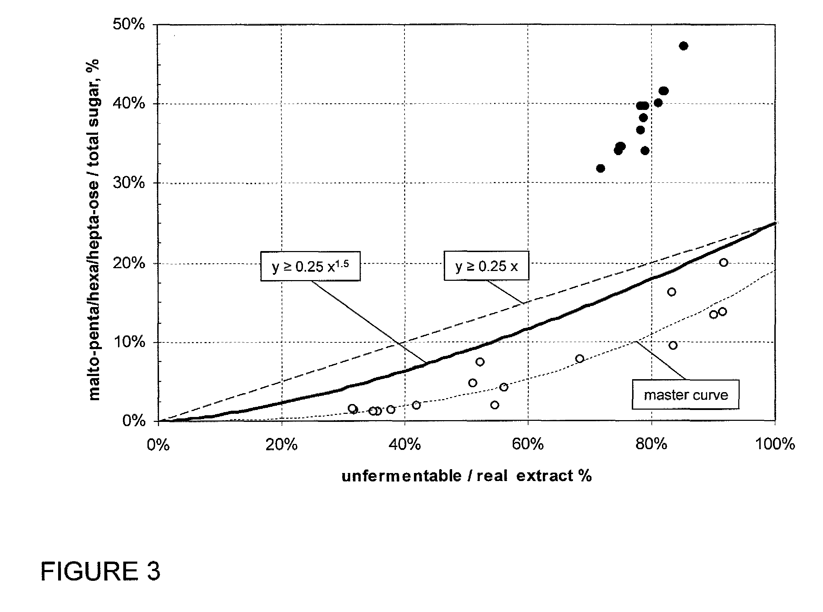

All the NA beers on the market have an unfermentable extract below 5.0 g / 100 ml, which is lower than the one of the NA beers of the present invention. The unfermentable extract is defined as the value of the real extract less the total content of sweet sugars, which consist of fructose, maltose, glucose, maltotriose, and saccharose. Another observation is that the content of high molecular weight dextrin, viz., maltopentaose, maltohexaose, and maltopentahose is quite low in the NA beers on the market, compared with the NA beers according to the present invention; the combination of maltopentaose, maltohexaose, and maltopentahose is hereinafter referred to as "malto-penta/hexa/hepta-ose". Figure 3 plots the ratio of unfermentable to real extracts, hereinafter referred to as "x", vs the ratio of the contents of malto-penta/hexa/hepta-ose to total sugars, hereinafter referred to as "y". The total sugars consist of fructose, glucose, maltose, saccharose, maltotriose, maltotetraose, maltopentaose, maltohexaose, and maltopentahose. Relative values bounded between 0 and 1 were considered to account for possible dilutions of varying degrees between NA beers of different origins and obtained from different processes in the hope of yielding a relationship between these two parameters and thus of defining a master curve for NA beers. Indeed, it was observed that all the NA beers on the market (white circles) clearly followed a master curve of the type, $y = A x^b$ regardless of their origins (cf. thin dotted line in Figure 3), whilst the NA beers according to the present invention (black circles) distinguished themselves clearly from this trend.

The NA beers of the present invention therefore characterize themselves from the beers on the market in that

$$y \geq A\, x^b$$

wherein A = 0.25 and b = 1.5, as represented in Figure 3 with a thick solid line. In a preferred embodiment, b = 1, to yield a linear relationship represented in Figure 1 with a thin dashed line. A may take any value between 0.25 and 0.45, such as 0.3 or 0.35, and the power b may take any value between 1 and 1.5, such as 1.25 or 1.35.

In a preferred embodiment, the NA beer of the present invention is characterized by:

- a ratio x between unfermentable over real extracts of at least 25%, and/or
- a sugars ratio y of at least 25%, preferably at least 30%, more preferably at least 35%

As discussed above, the preparation of a wort of fermentability not higher than 25% combined with a cold contact fermentation process allows a NA beer to be produced having a flavour profile very close to normal lager beers and an alcohol content lower than 0.7 vol.%, such as not more than 0.5 vol.%, preferably not more than 0.3 vol.%, more preferably not more than 0.1 vol.%, and even not more than 0.05 vol.%. It is believed that such a close matching flavour profile of the NA beers of the present invention with normal lager beer is due inter alia to a high value of real extracts yielding body, in combination with a high amount of unfermentable extracts, and in particular of a high extract of unfermentable malto-penta/hexa/hepta-ose, resulting in a low amount of sweet sugars. In particular, a NA beer according to the present invention may have a real extract of at least 5.0 g / 100 ml, preferably at least 6.0 g/ 100 ml, more preferably at least 7 g/ 100 ml and an unfermentable extract of at least 4.0 g / 100 ml, preferably at least 5.5 g / 100 ml, more preferably 6.0 g / 100 ml, most preferably at least 6.5 g / 100 ml. This should result in a total content of sweet sugars not exceeding 3 g / 100 ml, preferably not more than 2 g / 100 ml, more preferably not more than 1.5 g / 100 ml.

**Claims**

1. Alcohol free or low alcohol beer having an alcohol content of not more than 0.7 vol.%, **characterized by** a relationship

$$y \geq A\, x^b$$

wherein A = 0.25 and b = 1.5, and wherein

  • x is the ratio between unfermentable over real extracts, wherein the unfermentable extract is the value of the real extract less the total content of real sugars, which consist of fructose, maltose, glucose, maltotriose, and saccharose, and
  • y is the ratio between the combined content of maltopentaose, maltohexaose, and maltoheptaose over the total amount of main sugars, wherein the main sugars consist of fructose, maltose, glucose, saccharose, maltotriose, maltotetraose, maltopentaose, maltohexaose, and maltoheptaose.

2. Beer according to claim 1, wherein b = 1, and/or wherein preferably A =0.3, more preferably 0.35.

3. Beer according to claim 1 or 2, wherein

  • the ratio x between unfermentable over real extracts is of at least 25%, and/or
  • the sugars ratio y is of at least 25%, preferably at least 30%, more preferably at least 35%

4. Beer according to any of the preceding claims, wherein the alcohol content is not more than 0.5 vol.%, preferably not more than 0.3 vol.%, more preferably not more than 0.1 vol.%, most preferably, not more than 0.05 vol.%.

5. Beer according to any of the preceding claims, wherein the unfermentable extract is at least 4.0 g / 100 ml, preferably at least 5.5 g / 100 ml, more preferably 6.0 g / 100 ml, most preferably at least 6.5 g / 100 ml.

6. Beer according to any of the preceding claims, wherein the real extract is at least 5.0 g / 100 ml, preferably at least 6.0 g/ 100 ml, more preferably at least 7 g/ 100 ml.

7. Beer according to any of the preceding claims, wherein the total content of sweet sugars is not more than 3g/100ml, preferably not more than 2g/100ml, more preferably not more than 1.5 g / 100 ml.

8. Method for producing an alcohol free or low alcohol beer comprising the following steps:

   (a) Mashing grain grits by inactivating β-amylase and reacting α-amylase with starch within the grits to produce a wort of fermentability of not more than 29%, preferably not more than 25%, more preferably nor more than 20%; and
   (b) Fermenting the thus produced wort by a cold contact process to produce a beer having an alcohol content of not more than 0.7 vol.%, preferably not more than 0.5 vol.%, more preferably not more than 0.3 vol.%, most preferably not more than 0.03 vol.%.

9. Method according to claim 8, wherein the grain grits comprises malt, preferably admixed with corn grits and/or rice grits.

10. Method according to claim 8 or 9, wherein β-amylase is inactivated by bringing the temperature of the grits mash over 75°C, preferably over 85°C and wherein thermostable α-amylase is added.

11. Method according to any of claims 9 and 10, wherein the grits comprises 30 to 100 wt% malt and 70 to 0 wt% corn grits, and wherein the mashing comprises the following steps:

   (a) If any, adding to a corn grits mash an appropriate amount of thermostable α-amylase and heating the corn mash to a temperature of 85 to 100°C;
   (b) Mashing in malt at a temperature of 70 to 100³C, preferably 78 to 85°C, and combining it with the corn mash, if any, and bringing the temperature of the thus obtained mash to higher than 75°C, preferably higher than 85°C and adding thereto thermostable α-amylase
   (c) Raising the temperature to a value of 90 to 98°C and transferring the mash to lautering.

12. Method according to any of claims 8 to 11, wherein the wort is boiled and has then a gravity comprised between 6 and 20°P, preferably between 8 and 12°P, more preferably between 9 and 11°P.

13. Method according to any of claims 8 to 12, wherein the wort is then cooled to a temperature of 2 to 8°C, preferably of 2 to 5°C, and then cooled to 2 to 0°C for the cold contact fermentation stage.

14. Method according to any of claims 8 to 13, wherein a beer according to any of claims 1 to 7 is produced.

FIGURE 1

FIGURE 2

FIGURE 3

EP 2 385 100 A1

Europäisches
Patentamt
European
Patent Office
Office européen
des brevets

## EUROPEAN SEARCH REPORT

**Application Number**

EP 10 16 2315

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | GB 2 181 450 A (SCOTTISH & NEWCASTLE BREWERIES SCOTTISH & NEWCASTLE BREWERIES [GB]) 23 April 1987 (1987-04-23) <br> * page 1, line 5 - line 6 * <br> * page 1, line 13 - line 15 * <br> * page 1, lines 34-35; claim 1; example 1 * <br> * page 1, line 47 - line 55 * <br> ----- | 1-14 | INV. <br> C12C12/04 <br> C12C7/04 <br> C12C7/047 <br> C12C11/00 |
| Y | US 5 242 694 A (REUTHER HANS [US]) 7 September 1993 (1993-09-07) <br> * column 1, line 25 - line 29; claim 1 * <br> ----- | 1-14 | |
| Y | GB 2 177 112 A (BINDING BRAUEREI AG BINDING BRAUEREI AG [DE]) 14 January 1987 (1987-01-14) <br> * page 1, line 21 - line 24 * <br> * example; <br> page 1, line 41 * <br> * page 1, line 34 - line 36 * <br> ----- | 1-14 | |
| A | WO 2008/098320 A1 (UNIV LEUVEN KATH [BE]; CBOK ONDERZOEKSCENTRUM KAHO SI [BE]; AERTS GUID) 21 August 2008 (2008-08-21) <br> * claim 1 * <br> ----- | 1-14 | TECHNICAL FIELDS SEARCHED (IPC) <br><br> C12C |
| A | US 5 021 246 A (SIEBEN ROGER L [US] ET AL) 4 June 1991 (1991-06-04) <br> * claim 1; examples 1-6 * <br> ----- | 1-14 | |
| A | US 4 622 224 A (OWADES JOSEPH L [US]) 11 November 1986 (1986-11-11) <br> * claim 10; example II * <br> ----- | 1-14 | |

The present search report has been drawn up for all claims

| Place of search | Date of completion of the search | Examiner |
|---|---|---|
| The Hague | 12 November 2010 | Diller, Reinhard |

EPO FORM 1503 03.82 (P04C01)

**ANNEX TO THE EUROPEAN SEARCH REPORT
ON EUROPEAN PATENT APPLICATION NO.**

EP 10 16 2315

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2010

| Patent document cited in search report | | Publication date | Patent family member(s) | | Publication date |
|---|---|---|---|---|---|
| GB 2181450 | A | 23-04-1987 | NONE | | |
| US 5242694 | A | 07-09-1993 | NONE | | |
| GB 2177112 | A | 14-01-1987 | AT | 394391 B | 25-03-1992 |
| | | | AU | 601368 B2 | 13-09-1990 |
| | | | AU | 5935786 A | 08-01-1987 |
| | | | BE | 904990 A1 | 16-10-1986 |
| | | | CA | 1313833 C | 23-02-1993 |
| | | | CH | 671775 A5 | 29-09-1989 |
| | | | DE | 3522744 A1 | 08-01-1987 |
| | | | DK | 298386 A | 27-12-1986 |
| | | | ES | 8800717 A1 | 01-02-1988 |
| | | | FI | 862716 A | 27-12-1986 |
| | | | FR | 2584089 A1 | 02-01-1987 |
| | | | IE | 59234 B1 | 26-01-1994 |
| | | | IT | 1203579 B | 15-02-1989 |
| | | | JP | 1862047 C | 08-08-1994 |
| | | | JP | 5079307 B | 02-11-1993 |
| | | | JP | 62051975 A | 06-03-1987 |
| | | | LU | 86489 A1 | 02-12-1986 |
| | | | MX | 168007 B | 28-04-1993 |
| | | | NL | 8601658 A | 16-01-1987 |
| | | | NO | 862588 A | 29-12-1986 |
| | | | SE | 502985 C2 | 04-03-1996 |
| | | | SE | 8602830 A | 27-12-1986 |
| | | | US | 5077061 A | 31-12-1991 |
| WO 2008098320 | A1 | 21-08-2008 | AU | 2008215111 A1 | 21-08-2008 |
| | | | CN | 101730735 A | 09-06-2010 |
| | | | EP | 2118257 A1 | 18-11-2009 |
| | | | JP | 2010517592 T | 27-05-2010 |
| | | | US | 2010040731 A1 | 18-02-2010 |
| | | | ZA | 200905879 A | 28-04-2010 |
| US 5021246 | A | 04-06-1991 | NONE | | |
| US 4622224 | A | 11-11-1986 | AU | 594398 B2 | 08-03-1990 |
| | | | AU | 6594586 A | 01-06-1988 |
| | | | EP | 0290436 A1 | 17-11-1988 |
| | | | WO | 8803556 A1 | 19-05-1988 |

EPO FORM P0459

For more details about this annex : see Official Journal of the European Patent Office, No. 12/82

**EP 2 385 100 A1**

**Patent documents cited in the description**

- US 6689401 B
- US 5346706 A
- US 4970082 A
- GB 2181450 A